# EUROPEAN PATENT APPLICATION

(11) **EP 4 738 582 A1**
(43) Date of publication of application: **06.05.2026**
(21) Application number: 24922440.3
(22) Date of filing: 17.12.2024
(51) Int. Cl.: H01M 50/289, H01M 50/264, H01M 50/367, H01M 50/249, B60L 50/64

(54) **PACK HOUSING, BATTERY PACK, AND VEHICLE INCLUDING SAME**

(30) Priority: 30.01.2024 KR 20240014100
(71) Applicant: LG Energy Solution, Ltd., Seoul 07335 (KR)
(72) Inventor: CHOI, Sung-Man, Daejeon 34122 (KR); KIM, Hee-Gyu, Daejeon 34122 (KR); SON, Do-Wung, Daejeon 34122 (KR); YANG, Kun-Joo, Daejeon 34122 (KR)
(74) Representative: BCKIP Part mbB
(86) International application number: PCT/KR2024/020516
(87) International publication number: WO 2025/164931

(57) **Abstract**

Provided are a pack housing for a common battery pack, and a battery pack and a vehicle including the pack housing. The pack housing includes a bottom cover on which a battery module is placed; an outer frame formed on an outer side of the bottom cover; and a partition frame dividing an inner space formed by the bottom cover and the outer frame into a plurality of module spaces, wherein at least one of the outer frame and the partition frame has a variable structure capable of adjusting a width.

## Description

### TECHNICAL FIELD

This application is based on and claims priority from Korean Patent Application No. 10-2024-0014100, filed on January 30 2024, with the Korean Intellectual Property Office, the disclosure of which is incorporated herein in its entirety by reference.

The present disclosure relates to a pack housing, a battery pack including the same, and a vehicle including the battery pack, and more particularly, to a pack housing commonly applicable to battery modules of various sizes, a battery pack, and a vehicle including the same.

### BACKGROUND ART

As technology development and demand for various mobile devices, electric vehicles, and energy storage systems (ESSs) increase significantly, interest in and demand for secondary batteries as energy sources are steadily increasing.

Lithium secondary batteries are widely used as secondary batteries because they have almost no memory effect compared to nickel-based secondary batteries, and thus, have advantages of free charge/discharge, very low self-discharge rate, and high energy density. A lithium secondary battery mainly uses a lithium-based oxide and a carbon material as a positive electrode active material and a negative electrode active material, respectively. A lithium secondary battery includes an electrode assembly in which a positive electrode plate and a negative electrode plate to which a positive electrode active material and a negative electrode active material are respectively applied are located with a separator therebetween, and a casing in which the electrode assembly is sealed and accommodated along with an electrolytic solution, that is, a battery case.

In general, according to a shape of a casing, secondary batteries may be classified into can-type batteries in which an electrode assembly is received in a metal can, and pouch-type batteries in which an electrode assembly is received in a pouch of an aluminum laminate sheet.

An operating voltage of a unit secondary battery, that is, a unit battery cell, ranges from about 2.5 V to about 4.6 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity. When a battery pack is configured by connecting a plurality of battery cells in series/parallel, a method of first configuring a battery module including at least one battery cell, adding other elements by using the battery module, and accommodating them in a pack housing to configure a battery pack is generally used.

A pack housing of a battery pack in the related art is determined according to a battery module size. For example, even for the same vehicle OEM, a pack housing size and a mounting position with a vehicle are all different according to required energy.

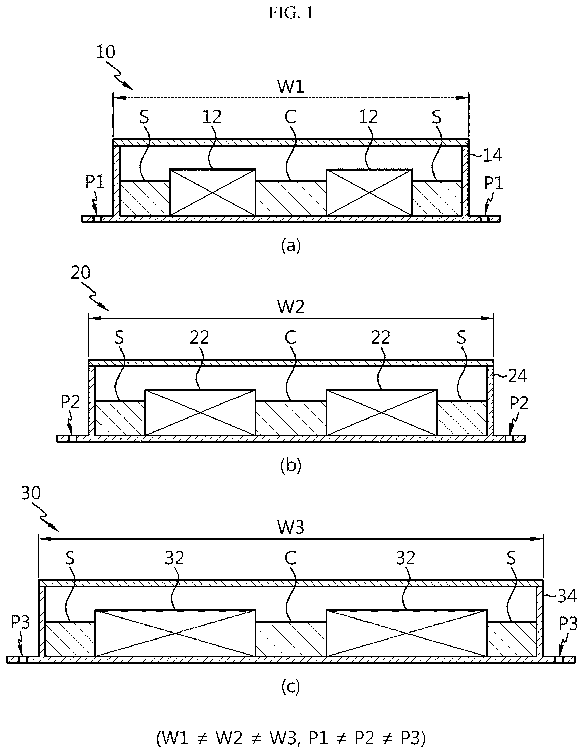

FIG. 1 is a view illustrating that a pack housing of a battery pack in the related art is determined according to a battery module size.

For example, when a vehicle OEM wants to produce battery packs with energies of 50 kWh, 70 kWh, and 90 kWh, as shown in (a), (b), and (c) of FIG. 1, a battery pack 10 for 50 kWh, a battery pack 20 for 70 kWh, and a battery pack 30 for 90 kWh have different pack housing sizes W1, W2, W3 and different vehicle mounting positions P1, P2, P3 (W1 ≠ W2 ≠ W3, P1 ≠ P2 ≠ P3).

Although the battery pack 10 for 50 kWh, the battery pack 20 for 70 kWh, and the battery pack 30 for 90 kWh include battery modules 12, 22, 32 of different sizes in pack housings 14, 24, 34 of different sizes, the battery pack 10 for 50 kWh, the battery pack 20 for 70 kWh, and the battery pack 30 for 90 kWh have a center beam C and a side beam S having the same shape.

In this case, not only battery packs but also vehicle frames should be made in three types, which results in a lot of loss in terms of cost and time. When a common battery pack that may have the same pack housing size and the same vehicle mounting position regardless of energy may be provided, cost and time loss may be reduced.

### DISCLOSURE

### Technical Problem

The present disclosure is directed to providing a pack housing for a common battery pack.

The present disclosure is also directed to providing a common battery pack by including such a pack housing.

### Technical Solution

In one aspect of the present disclosure, there is provided a pack housing including: a bottom cover on which a battery module is placed; an outer frame formed on an outer side of the bottom cover; and a partition frame dividing an inner space formed by the bottom cover and the outer frame into a plurality of module spaces, wherein at least one of the outer frame and the partition frame has a variable structure capable of adjusting a width.

Preferably, the partition frame may include a center beam disposed in a front-back direction on the bottom cover, and the center beam has a variable structure capable of adjusting a width in a left-right direction.

In an embodiment of the present disclosure, the variable structure may include a main body, an expansion portion, and a width adjustment member, wherein the expansion portion has a receiving space corresponding to a cross-section of the main body and is slidably fitted to an outer peripheral surface of the main body, the expansion portion is configured to extend a width by being drawn out from the main body, and the width adjustment member is configured to adjust an extension length of the expansion portion while fixing the expansion portion drawn out from the main body.

In this case, the expansion portion may include a first expansion portion located on one side of the main body and a second expansion portion located on the other side of the main body.

Also, the expansion portion may include a support portion contacting a side surface of the main body, and an upper extension portion and a lower extension portion respectively extending from both ends of the support portion in a height direction to a top surface and a bottom surface of the main body.

Furthermore, the expansion portion may include a front extension portion and a rear extension portion respectively extending from both ends of the support portion in a longitudinal direction to a front surface and a rear surface of the main body.

In this case, the width adjustment member may include: an expansion portion fastening hole formed in the front extension portion and the rear extension portion in a long hole shape along a width direction of the expansion portion to allow movement of the expansion portion; a fastening protrusion formed on the main body to protrude from the expansion portion fastening hole; and a fastening member fastened to the fastening protrusion through the expansion portion fastening hole to fix the expansion portion in a moved state.

In another embodiment of the present disclosure, the expansion portion may include a slide hole formed therein to penetrate along a width direction or a slide groove that is closed on an outside and is recessed inward.

In this case, the width adjustment member may include: an expansion portion fastening hole formed in a long hole shape along the width direction of the expansion portion to allow movement of the expansion portion; at least one main body fastening hole formed in the main body and communicating with the expansion portion fastening hole; and a fixing member fastened to the main body fastening hole through the expansion portion fastening hole to fix the expansion portion in a moved state.

In another embodiment of the present disclosure, the variable structure may include a main body, an expansion portion, and a width adjustment member, wherein the main body includes a slide hole formed therein to penetrate along a width direction, the expansion portion is slidably provided in the slide hole, and the width adjustment member is configured to adjust an extension length of the expansion portion while fixing the expansion portion drawn out from the main body.

In the present disclosure, at least one of the outer frame and the partition frame may be a beam manufactured by extruding aluminum so that an empty space and a rib are mixed inside.

In the present disclosure, a flow path through which a fluid flows may be provided inside at least one of the outer frame and the partition frame.

In this case, a communication hole for communication between the module space and the flow path may be formed in at least one of the outer frame and the partition frame.

Also, the flow path may have a multi-layer structure in which a plurality of unit flow paths are stacked in a height direction.

Here, the fluid may include gas generated during thermal runaway of the battery module.

In the present disclosure, at least one of the outer frame and the partition frame may be formed in a pipe shape with a hollow inner space, and one or more separation walls for dividing the hollow inner space into an upper space and a lower space may be provided in a height direction to divide the hollow inner space into a plurality of areas in the height direction.

In another aspect of the present disclosure, there is provided a battery pack including the pack housing according to the present disclosure and a battery module seated in each of a plurality of module spaces.

Here, the battery module may be fixed to at least one of an outer frame and a partition frame.

In particular, the battery module may include a battery cell assembly and a module case for fixing the battery cell assembly, the battery module may include a fastening block protruding from the module case and provided so that a bolt is inserted in an up-down direction, and the battery module may be fixed to at least one of the outer frame and the partition frame when the bolt is fastened to the fastening block.

In another aspect of the present disclosure, there is provided a vehicle including the battery pack.

### Advantageous Effects

According to an aspect of the present disclosure, a battery pack that is assembled to have the same pack housing size and the same vehicle mounting position regardless of a battery module size (width dimension) is implemented.

According to an aspect of the present disclosure, battery packs of various energies having the same pack housing size and the same vehicle mounting position may be manufactured. The battery packs include a pack housing including an outer frame or a partition frame having a variable structure.

In particular, a pack housing of the present disclosure proposes center beam technology having a variable structure. The present disclosure has a structural characteristic that allows assembly regardless of a battery module width (energy) by adopting a variable structure for a center beam. According to the present disclosure, the center beam does not have one structure but has a shape that is variable according to a battery module size. Accordingly, a battery pack of the same size may be made even when different module sizes are applied. According to the present disclosure, costs may be reduced through center beam technology having a variable structure.

According to an aspect of the present disclosure, customer requirements for common battery packs may be satisfied. A common battery pack having the same pack housing size and the same vehicle mounting position regardless of energy may be manufactured. That is, according to the present disclosure, a battery pack of the same size may be made no matter which battery module size is applied. The common battery pack provided by the present disclosure may save cost and time. A vehicle frame also does not need to be changed.

According to another aspect of the present disclosure, when gas is generated in a battery pack, the gas may be discharged to the outside by delaying/preventing the gas from affecting adjacent battery modules. Even without significantly changing an overall structure of a battery pack, a discharge direction of venting gas generated in the battery pack may be effectively controlled, the venting gas may be rapidly discharged, and fire may be prevented or the spread of fire may be delayed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating that a pack housing of a battery pack in the related art is determined according to a battery module size.
FIG. 2 is a view illustrating that a pack housing of a battery pack according to the present disclosure may be commonly applied to battery modules of various sizes.
FIG. 3 is another view illustrating that a pack housing of a battery pack according to the present disclosure may be commonly applied to battery modules of various sizes.
FIG. 4 is an exploded perspective view illustrating a battery pack according to an embodiment of the present disclosure.
FIG. 5 is a top view illustrating a pack housing included in the battery pack of FIG. 4.
FIG. 6 is a perspective view illustrating some elements of a battery pack to describe a variable structure of a center beam.
FIG. 7 is an exploded perspective view of FIG. 6.
FIG. 8 is a view for describing that the center beam of FIG. 6 is applied to battery modules of various sizes.
FIG. 9 is a view for describing another example of a variable structure center beam.
FIG. 10 is a view for describing still another example of a variable structure center beam.
FIG. 11 is a view schematically illustrating a configuration of a vehicle according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted, or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

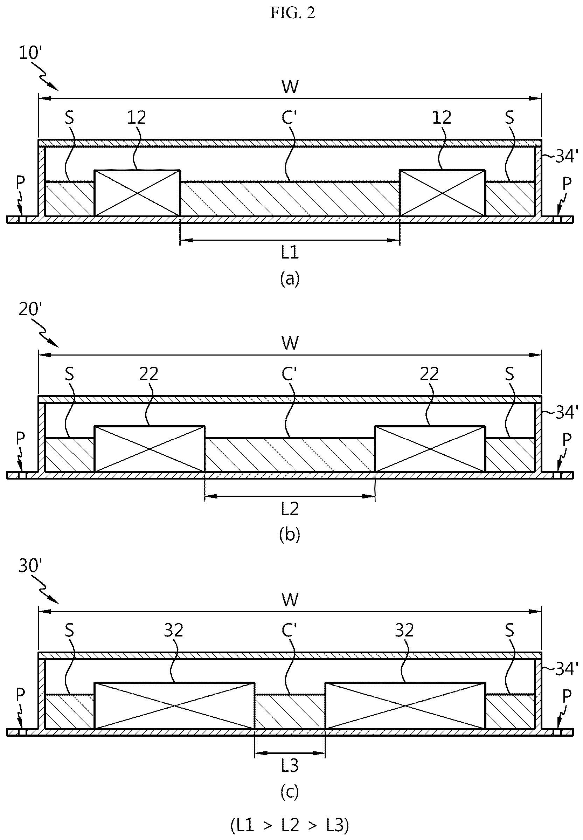

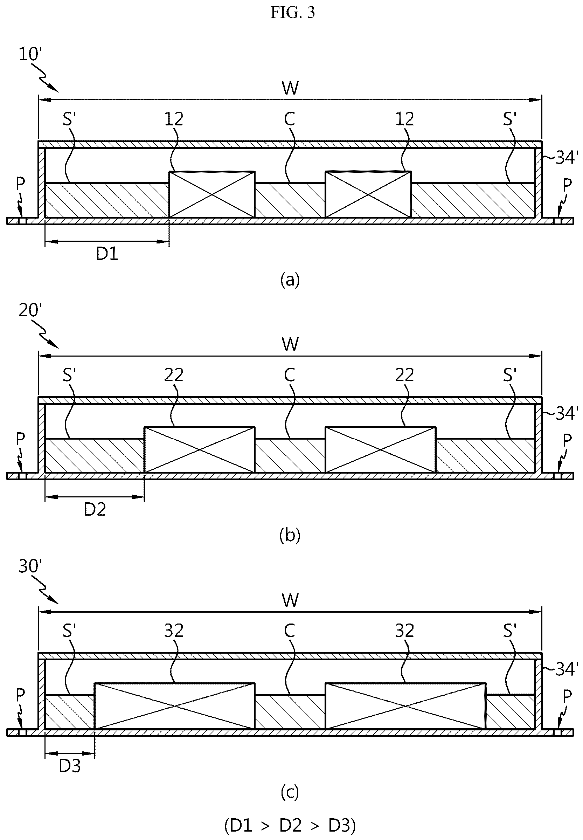

FIG. 2 is a view illustrating that a pack housing of a battery pack according to the present disclosure may be commonly applied to battery modules of various sizes. FIG. 3 is another view illustrating that a pack housing of a battery pack according to the present disclosure may be commonly applied to battery modules of various sizes.

When a battery pack for 50 kWh, a battery pack for 70 kWh, and a battery pack for 90 kWh are to be manufactured as in the example of FIG. 1, referring to (a), (b), and (c ) of FIGS. 2 and 3, a battery pack 10' for 50 kWh, a battery pack 20' for 70 kWh, and a battery pack 30' for 90 kWh have the same pack housing size W and the same vehicle mounting position P. Accordingly, a vehicle frame also does not need to be changed.

Even when the battery pack 10' for 50 kWh, the battery pack 20' for 70 kWh, and the battery pack 30' for 90 kWh have the battery modules 12, 22, 32 of different sizes as in the example of FIG. 1, the battery pack 10' for 50 kWh, the battery pack 20' for 70 kWh, and the battery pack 30' for 90 kWh may be manufactured by using a pack housing 34' having the same size according to the present disclosure.

This is possible because at least one of a side beam and a center beam included in the pack housing 34' has a variable structure capable of adjusting a width.

FIG. 2 illustrates an example where the pack housing 34' includes a center beam C' having a variable structure and a side beam S not having a variable structure. FIG. 3 illustrates an example where the pack housing 34' includes a side beam S' having a variable structure and a center beam C not having a variable structure. Alternatively, the pack housing 34' may include the center beam C' having a variable structure and the side beam S' having a variable structure.

An assembly state of each of the battery packs 10', 20', 30' using the pack housing 34' will be described in more detail. In FIG. 2, among the battery pack 10' for 50 kWh, the battery pack 20' for 70 kWh, and the battery pack 30' for 90 kWh, a battery module 32 included in the battery pack 30' for 90 kWh has the largest size, and a width of the center beam C' included in the battery pack 30' for 90 kWh is L3 to accommodate the battery module 32. The battery pack 20' for 70 kWh including a battery module 22 having a size smaller than that of the battery module 32 is assembled so that a width of the center beam C' is extended to L2, greater than L3. The battery pack 10' for 50 kWh including a battery module 12 having a size smaller than that of the battery module 22 is assembled so that a width of the center beam C' is extended to L1, greater than L2 (L1 > L2 > L3).

Likewise, the battery pack 30' for 90 kWh including the battery module 32 having the largest size in FIG. 3 is assembled so that a width of the side beam S' is D3, and the battery pack 20' for 70 kWh including the battery module 22 having a size smaller than that of the battery pack 30' for 90 kWh is assembled so that a width of the side beam S' is extended to D2, greater than D3. Also, the battery pack 10' for 50 kWh including the battery module 12 having a size smaller than that of the battery pack 20' for 70 kWh is assembled so that a width of the side beam S' is extended to D1, greater than D2 (D1 > D2 > D3).

As such, according to the present disclosure, the battery packs 10', 20', 30' of various energies may be manufactured by using the same pack housing 34' regardless of a battery module size (width dimension) by adjusting a width of the side beam S' or the center beam C'. Because the battery packs 10', 20', 30' having different energies may have the same pack housing size W and the same vehicle mounting position P, the battery packs 10', 20', 30' are common battery packs. As such, according to the present embodiment, battery packs of various energies having the same pack housing size and the same vehicle mounting position may be manufactured.

The present disclosure has a structural characteristic that allows assembly regardless of a battery module width (energy) by adopting a variable structure capable of adjusting a width for a center beam or a side beam of a pack housing. According to the present disclosure, a center beam or a side beam does not have a fixed structure, but has a shape that is variable to adjust a width according to a battery module size. Accordingly, a battery pack of the same size may be made even when different battery module sizes are applied.

According to the present disclosure, customer requirements for common battery packs may be satisfied. A common battery pack provided by the present disclosure may save cost and time.

Hereinafter, various pack housings and battery packs including the same according to embodiments of the present disclosure will be described in detail. Because a pack housing according to an embodiment of the present disclosure has a variable structure to correspond to battery modules of various sizes, the variable structure will be described in detail.

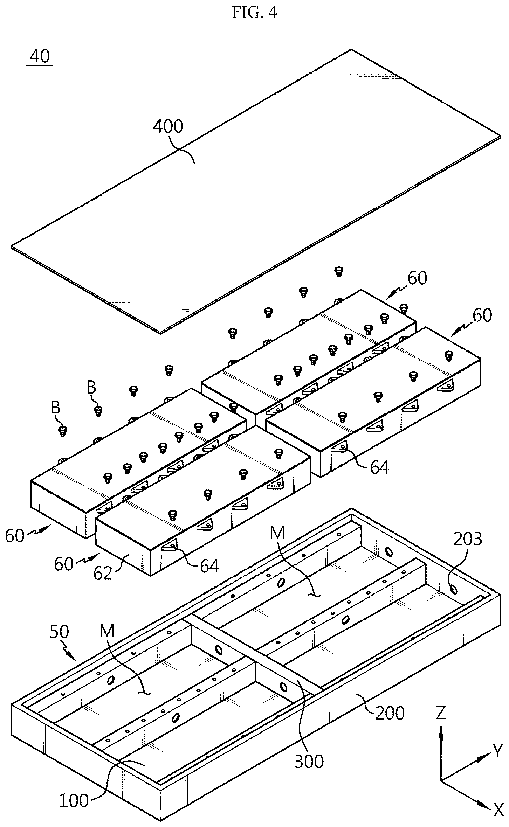

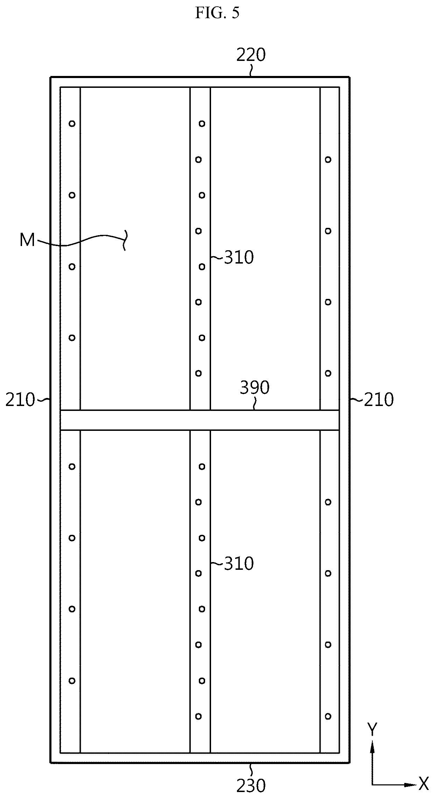

FIG. 4 is an exploded perspective view illustrating a battery pack according to an embodiment of the present disclosure. FIG. 5 is a top view illustrating a pack housing included in the battery pack of FIG. 4.

Referring to FIGS. 4 and 5, a battery pack 40 according to an embodiment of the present disclosure includes a pack housing 50 and a battery module 60 according to the present disclosure.

First, the pack housing 50 is a container in which the battery module 60 is fixed and accommodated. The pack housing 50 may be disposed at a certain position in a vehicle. The pack housing 50 may largely include a bottom cover 100, an outer frame 200, and a partition frame 300.

The bottom cover 100 provides a space in which the battery module 60 is placed, and may be provided in a flat plate shape having a relatively large area and may be disposed under the battery module 60 to cover the bottom of each battery module 60.

The outer frame 200 and the partition frame 300 may be vertically coupled to the bottom cover 100 and may also be coupled to each other. Each of the outer frame 200 and the partition frame 300 may be an aluminum extrusion structure, and may be welded and/or bolted to form the pack housing 50. For example, the outer frame 200 and the partition frame 300 may each be manufactured by extruding aluminum so that an empty space and a rib are mixed inside, and may be welded to form the pack housing 50. Accordingly, the weight of the pack housing 50 may be reduced and mechanical rigidity may be maintained at a reliable level or higher. Also, the empty space may reduce the weight of the frames 200, 300 and may also function as a path for releasing accumulated heat. That is, as heat of the pack housing 50 is discharged through the empty space, a temperature of the pack housing 50 may be lowered, and as the temperature of the pack housing 50 is lowered, heat generated from the battery module 60 may be smoothly absorbed.

The outer frame 200 may be formed at a certain height on an outer side of the bottom cover 100, and may have a substantially beam shape with an empty interior. For example, the outer frame 200 may include one pair of side beams 210 respectively disposed on both sides of the bottom cover 100 in a left-right direction (X direction of FIGS. 4 and 5), and a front beam 220 and a rear beam 230 respectively disposed on both sides in a front-back direction (Y direction of FIGS. 4 and 5). The side beams and the front and rear beams may be disposed on both sides, the front, and the back of the bottom cover 100 to cover side surfaces of the battery module 60. The side beams 210, the front beam 220, and the rear beam 230 may be assembled as separate parts or may be an integrated component connected to each other. The assembling may be done by using any of various methods such as fitting, bolting, adhesion, or welding. The outer frame 200 is vertically coupled along an edge of the bottom cover 100 to form a wall. In the pack housing 50, the front beam 220 may form a front wall, the rear beam 230 may form a rear wall, and the side beams 210 may form a left wall and a right wall.

The partition frame 300 divides an inner space formed by the bottom cover 100 and the outer frame 200, that is, an inner space limited in a box shape by the bottom cover 100 and the outer frame 200, into a plurality of spaces, and may also have a substantially beam shape with an empty interior. The partition frame 300 may include one or more center beams 310 and cross beams 390 arranged in a lattice shape. The center beam 310 may refer to a partition frame disposed in the front-back direction on the bottom cover 100, and the cross beam 390 may refer to a partition frame disposed in the left-right direction on the bottom cover 100. Both ends of the center beam 310 may be coupled to the front beam 220 and the rear beam 230. Both ends of the cross beam 390 may be coupled to the left and right side beams 210.

The number of centers beams 310 and the number of cross beams 390 included in the pack housing 50 may be different from those in FIGS. 4 and 5. There may be at least one center beam 310 and cross beam 390, and there may be a plurality of center beams 310 and cross beams 390 in order to accommodate a plurality of battery modules 60. As such, an inner space of the pack housing 50 may be divided into a plurality of areas by the partition frame 300, that is, the center beam 310 and the cross beam 390, and the battery module 60 may be individually seated in each corresponding area. In this case, each corresponding area may be defined as a module space M in the present disclosure. The battery module 60 may be individually seated in each of a plurality of module spaces M. The battery modules 60 may each have a substantially rectangular parallelepiped shape and may be neatly arranged in the pack housing 50, and each battery module 60 may be connected to secure power required for driving the vehicle. Alternatively, only the cross beam 390 may be provided without the center beam 310, or only the center beam 310 may be provided without the cross beam 390.

In this case, in the pack housing 50, at least one of the outer frame 200 and the partition frame 300 may have a variable structure capable of adjusting a width.

As described above, a pack housing of a battery pack in the related art is determined according to a battery module size. In the related art, battery packs having different pack housing sizes and vehicle mounting positions are manufactured according to battery module sizes. In this case, the battery packs have a center beam and a side beam having the same shape. According to the present disclosure, the outer frame 200 or the partition frame 300 included in the pack housing 50 is provided as a variable structure capable of adjusting a width. That is, at least one of the outer frame 200 and the partition frame 300 has a variable structure capable of adjusting a width to provide the pack housing 50 appropriately accommodating battery modules of various sizes by changing a width of the outer frame 200 or the partition frame 300 according to the size of a battery module accommodated therein even without changing a pack housing size.

Preferably, in the case of the outer frame 200, a width of only one side toward the battery module 60 may be adjusted so as not to change an apparent size of the pack housing 50. In the case of the partition frame 300, widths of both sides toward the battery module 60 may be adjusted.

As shown in FIGS. 4 and 5, in the battery pack 40 including the battery modules 60 arranged in a 2x2 array, the side beams 210 on both sides may have variable structures, the center beam 310 may have a variable structure, the cross beam 390 may have a variable structure, or the front beam 220 and the rear beam 230 may have variable structures. When only a length of the battery module 60 in a width direction (X direction of FIGS. 4 and 5) is changed, it is possible to conveniently respond to a change in the size of the battery module 60 even with a variable structure of only the center beam 310.

Next, the battery module 60 may include a battery cell assembly (not shown) and a module case 62 for fixing the battery cell assembly.

The battery cell assembly may be formed by stacking a plurality of battery cells or integrating a plurality of battery cells. For example, pouch-type batteries may be employed as the battery cells, and the pouch-type batteries may be stacked in one direction with their wide surfaces standing upright to form the battery cell assembly. However, other types of secondary batteries, for example, cylindrical or prismatic can-type batteries may also be employed as battery cells included in the battery module 60. For example, when cylindrical batteries are employed, the cylindrical batteries may be vertically erected and densely arranged in a plurality rows and columns, and manufactured as a single battery cell assembly by a frame or potting resin that may maintain this dense arrangement. For example, the battery cell may be a 4680 battery cell. Here, 4680 is a form factor. The first two numbers in a form factor indicate a diameter of a secondary battery, and the remaining numbers indicate a height of the secondary battery. A 4680 cell has higher efficiency and a greater size than an existing 18650 cell or 21700 cell.

The module case 62 accommodates the battery cell assembly therein. The module case 62 may be formed in a rectangular box shape surrounding an outer side of the battery cell assembly to hold the battery cell assembly therein. It may be preferable that the module case 62 is formed of a metal material having high mechanical rigidity in order to sufficiently protect the battery cell assembly from external impact and swelling of the pouch-type batteries. When can-type batteries are used, the module case 62 may be formed of a plastic material to reduce weight.

Preferably, the outer frame 200 and the partition frame 300 of the pack housing 50 may be used as a place for fixing the battery module 60. The battery module 60 may be fastened with a bolt B to the outer frame 200 and the partition frame 300. For example, the battery module 60 may include a fastening block 64 protruding from the module case 62 and provided so that the bolt B is inserted in the up-down direction. In the battery module 60, the fastening block 64 may be provided at a height that allows the fastening block 64 to be disposed on a top surface of the outer frame 200 or the partition frame 300. The battery module 60 may be fixed to the pack housing 50 when the bolt B is fastened to the fastening block 64 disposed on the outer frame 200 or the partition frame 300. In the illustrated example, the battery module 60 may be fixed to the side beam 210 and the center beam 310, and a hole into which the bolt B is fastened may be formed in the side beam 210 and the center beam 310 as illustrated.

In addition, the battery pack 40 may further include an electronic unit assembly (not shown) and a top cover 400. The electronic unit assembly may include a relay device, a current sensor, a fuse, a battery management system (BMS), and a manual service disconnector (MSD). The relay device is a switching component that selectively opens and closes a charge/discharge path through which current flows, and may block the flow of charge/discharge current when abnormality occurs in the battery pack 40. The BMS refers to a battery management device for generally controlling a charging/discharging operation of the battery module 60 and may be an element typically included in the battery pack 40. The BMS estimates a state of a battery cell in the battery pack 40 and manages the battery pack 40 by using estimated state information. For example, the BMS estimates and manages state information of the battery pack 40 such as state of charge (SOC), state of health (SOH), maximum input/output power allowance, and output voltage of the battery pack 40. Also, the BMS controls charging or discharging of the battery pack 40 by using the state information and further, may also estimate a replacement time of the battery pack 40. The BMS manages and monitors a state of a battery cell such as a voltage, current, and temperature and maintains the battery pack 40 in an optimal state based on the state. That is, the BMS may efficiently manage the battery pack 40 of an electric vehicle to ensure stable driving of the electric vehicle, may predict a replacement time of the battery pack 40, and may detect abnormality of the battery pack 40 in advance to suppress car accidents. Also, the MSD is a system for selectively cutting off the power of a high-voltage battery by using a physical method, and is a component that cuts off power by disconnecting a service plug when necessary. The electronic unit assembly may be packaged together with the battery module 60 without being exposed to the outside by the pack housing 50 and the top cover 400. A sealing member (not shown) such as a gasket may be provided between the pack housing 50 and the top cover 400 for sealing. For example, the sealing member may be a band-type member provided along an edge shape of the pack housing 50. The sealing member may be formed of a material having a certain elasticity to stably apply a desired sealing force due to pressure applied when the pack housing 50 and the top cover 400 are coupled, and may be compressed or deformed in the up-down direction due to the pressure. The sealing member may be formed of a rubber material, for example, an EPDM material.

The battery pack 40 may have a substantially rectangular parallelepiped appearance due to the coupling between the pack housing 50 and the top cover 400. When the battery pack 40 is mounted in an electric vehicle such as EV or HEV, because a mounting space is limited due to vehicle components that are arranged at a high degree of integration, it is preferable that the battery pack 40 has a rectangular parallelepiped structure so as to be mounted in a narrow space such as a space between a driver's seat and a passenger seat.

Although the top cover 400 has a substantially plate shape in the illustrated example, the top cover 400 may have a flat box lid shape having an inner receiving space and an open lower side. The top cover 400 may be formed of an insulating resin for electrical insulation. For example, the top cover 400 may be manufactured as a plastic injection molding product. The top cover 400 may ensure insulation from the battery module 60, may ensure processing convenience, and may reduce man-hours for manufacturing.

The pack housing 50 provides a space in which the battery module 60 and the electronic unit assembly may be accommodated, and may further include a bracket or mounting structure (not shown) to be coupled to a vehicle body or a frame. Because the pack housing 50 provides a mechanical support force to the battery module 60 and the electronic unit assembly and protects the battery module 60 and the electronic unit assembly from external impact, it is preferable that the pack housing 50 is formed of a metal material having high rigidity. When the pack housing 50 is formed of a metal material, an insulating sheet (not shown) may be further provided on the bottom cover 100. For example, the insulating sheet may be a polycarbonate sheet. In another example, an insulating coating layer may be provided on a top surface of the bottom cover 100. The insulating coating layer may be obtained by coating, applying, or attaching any one insulating material of silicone resin, polyamide, and rubber. Due to the insulating coating layer, the insulating coating effect may be maximized with a minimum amount of coating. Also, because the insulating coating layer is applied to the top surface of the bottom cover 100, insulation between the battery module 60 and the bottom cover 100 may be enhanced. In another example, at least some constituent members of the pack housing 50 may be manufactured as plastic injection molding products. For example, some constituent members may be formed of a plastic material having both insulation and flame retardancy (e.g., polycarbonate).

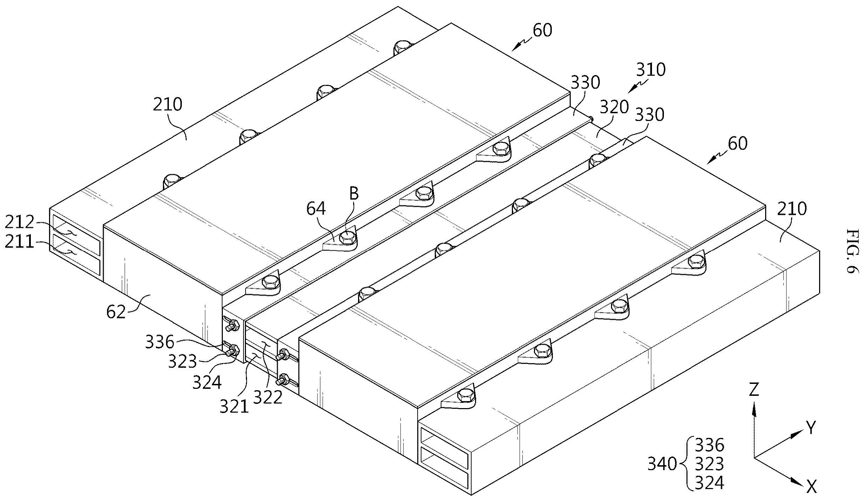

Preferably, a flow path through which a fluid may flow is provided inside at least one of the outer frame 200 and the partition frame 300. A detailed structure of the flow path will be described below in more detail with reference to FIGS. 6 to 8, and here, the advantages of the flow path will be mainly described.

The battery module 60 may experience thermal runaway in which a battery cell ignites due to overcharge or the like, and in this case, high-temperature and high-pressure gas, flames, and metal particles may be generated in a trigger cell where the battery cell ignites or a trigger module that is a battery module including the trigger cell. The present disclosure proposes to provide a flow path through which gas (venting gas) or flames generated during such thermal runaway may flow inside the outer frame 200 or the partition frame 300 included in the pack housing 50 to guide the gas or the flames through the flow path and discharge the gas or the flames to the outside. A venting device (not shown) may be further provided in a portion connecting the flow path to the outside to enable effective discharge.

Each module space M may have a structure in which a side surface is surrounded by the partition frame 300 or a structure in which a side surface is surrounded by the outer frame 200 and the partition frame 300. In this case, one or more communication holes 203 may be formed in at least one of the frames 200, 300 surrounding each module space M for communication between each module space M and the flow path. Positions of the communication holes 203 may be different from those shown as necessary. Gas or flames generated when an issue occurs in the battery module 60 seated in each module space M may be introduced into the flow path formed inside the frames 200, 300 through the communication holes 203.

In this case, because each module space M is a space closed by the bottom cover 100, the frames 200, 300 surrounding a side surface of each module space M and the top cover 400, each module space may be spatially separated from other module spaces.

Accordingly, according to the present disclosure, when an issue occurs in a specific battery module seated in one module space, gas or flames generated in the trigger module may be discharged to the outside through a flow path provided inside frames through a communication hole provided in the module space without being introduced into other module spaces, thereby blocking heat propagation to other normal modules and minimizing adverse effects on the normal modules.

As such, when gas is generated inside the battery pack 40, the gas may be discharged to the outside while delaying/preventing the gas from affecting adjacent battery modules. Even without significantly changing an overall structure of the battery pack 40, a discharge direction of venting gas generated inside the battery pack 40 may be effectively controlled, the venting gas may be rapidly discharged, and fire may be prevented or the spread of fire may be delayed.

The outer frame 200 or the partition frame 300 have a variable structure capable of adjusting a width. In particular, as described above, when the center beam 310 has a variable structure capable of adjusting a width in the left-right direction, it is possible to easily and simply correspond to battery modules of various sizes compared to a case where each of one pair of side beams 210 has a variable structure.

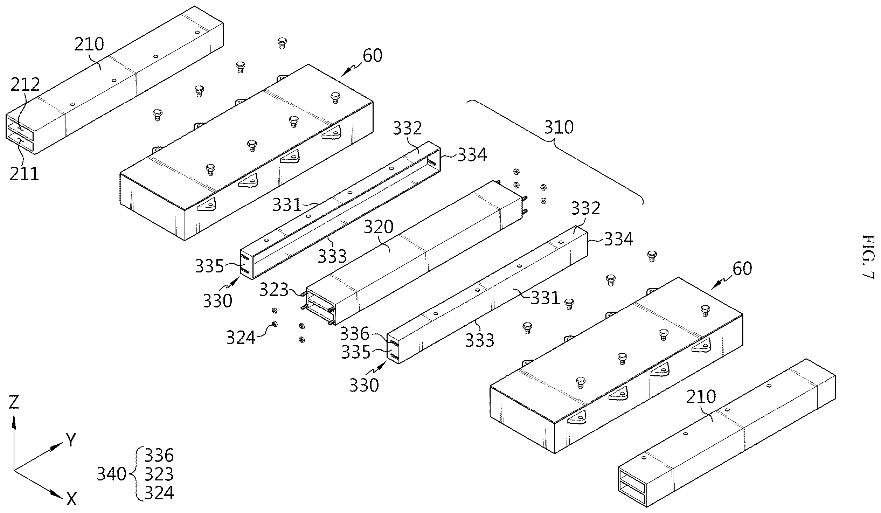

FIG. 6 is a perspective view illustrating some elements of a battery pack to describe a variable structure of a center beam. FIG. 7 is an exploded perspective view of FIG. 6.

Referring to FIGS. 6 and 7, the center beam 310 has a variable structure capable of adjusting a width, and includes a main body 320, an expansion portion 330, and a width adjustment member 340.

The main body 320 is the basis of the center beam 310. The expansion portion 330 has a receiving space corresponding to a cross-section of the main body 320 and is slidably fitted to an outer peripheral surface of the main body 320. The expansion portion 330 extends a width by being drawn out from the main body 320. The width adjustment member 340 adjust an extension length of the expansion portion 330 while fixing the expansion portion 330 drawn out from the main body 320.

The expansion portion 330 may include a first expansion portion 330 located on one side of the main body 320 and a second expansion portion 330 located on another side of the main body 320. The first expansion portion 330 and the second expansion portion 330 are the same element. That is, the expansion portion 330 may be provided as one pair. This is to form a symmetric structure considering that the battery modules 60 are accommodated on both sides with the center beam 310 therebetween. Alternatively, the expansion portion 330 may be provided only on one side of the main body 320.

A configuration of the expansion portion 330 will be described in detail. The expansion portion 330 may include a support portion 331 contacting a side surface of the main body 320, and an upper extension portion 332 and a lower extension portion 333 respectively extending from both ends of the support portion 331 in a height direction to a top surface and a bottom surface of the main body 320. The support portion 331, the upper extension portion 332, and the lower extension portion 333 may be connected to each other. The expansion portion 330 may be formed by cutting one metal plate into a set shape and bending both ends.

Also, the expansion portion 330 may include a front extension portion 334 and a rear extension portion 335 respectively extending from both ends of the support portion 331 in a longitudinal direction (Y direction of FIGS. 6 and 7) to a front surface and a rear surface of the main body 320. Because the front extension portion 334 and the rear extension portion 335 are included, the expansion portion 330 may be restricted from moving in the front-back direction of the main body 320 and may only move in the left-right direction, which is advantageous when adjusting a width.

The support portion 331, the upper extension portion 332, the lower extension portion 333, the front extension portion 334, and the rear extension portion 335 may be connected to each other to form a substantially rectangular box shape with one side facing the main body 320 open. For example, the expansion portion 330 may have a structure including five small plates in a rectangular parallelepiped shape with one side missing. The expansion portion 330 having this structure may include a slide groove that is closed on an outside and is recessed inward. Also, the support portion 331 may extending in the longitudinal direction, and the expansion portion 330 may have a '⊂' shaped cross-section (XZ cross-section) along the width direction. In a state where the main body 320 is fixed to the bottom cover 100 (see FIG. 4) by using welding or the like, the expansion portion 330 may slide from one end of the main body 320 between a position closely attached to the main body 320 and a position spaced apart from the main body 320, that is, left and right along the width direction.

In this case, the width adjustment member 340 includes an expansion portion fastening hole 336 formed in the front extension portion 334 and the rear extension portion 335 in a long hole shape along the width direction of the expansion portion 330 to allow movement of the expansion portion 330. The expansion portion fastening hole 336 is a variable fastening hole.

Also, the width adjustment member 340 includes a fastening protrusion 323 formed on the main body 320 to protrude from the expansion portion fastening hole 336, and a fastening member 324 fastened to the fastening protrusion 323 through the expansion portion fastening hole 336 to fix the expansion portion 330 in a moved state. For example, a screw thread may be formed on the fastening protrusion 323, and the fastening member 324 may be a nut.

The main body 320 is inserted into the expansion portion 330 so that the fastening protrusion 323 protrudes from the expansion portion fastening hole 336. A width of the center beam 310 is the largest when the fastening protrusion is located at an outer end of the expansion portion fastening hole 336, and a width of the center beam 310 is the smallest when the fastening protrusion 323 is located at an inner end of the expansion portion fastening hole 336.

The fastening protrusion 323 may elastically protrude, like a spring pin. In this case, when the expansion portion 330 is pushed into the main body 320 while pressing the fastening protrusion 323 and then a force for pressing the fastening protrusion 323 is removed, the fastening protrusion 323 may elastically protrude from the expansion portion fastening hole 336. In this way, the main body 320 and the expansion portion 330 may be easily coupled without a large force, and once coupled, the expansion portion 330 may not be detached from the main body 320, thereby ensuring stability. Even when the expansion portion 330 needs to be detached from the main body 320, if a worker momentarily applies a force in the width direction in a state where the fastening protrusion 323 protrudes from the expansion portion fastening hole 336, the expansion portion 330 may slidably move and the fastening protrusion 323 that elastically protrudes may be retreated and detached from the expansion portion fastening hole 336, thereby allowing the expansion portion 330 and the main body 320 to be easily separated.

Until an installation position of the expansion portion 330 is determined, a position of the fastening protrusion 323 in the expansion portion fastening hole 336 may be adjusted. Because the fastening protrusion 323 is in place but the expansion portion fastening hole 336 allows the main body 320 to move left and right, a position of the support portion 331 of the main body 320 may be adjusted from an end of the expansion portion 330. When the installation position is determined, the fastening member 324 may be fastened to the fastening protrusion 323 to prevent further movement.

Referring to FIGS. 4 to 7 together, a method of assembling the battery module 60 onto the pack housing 50 including the center beam 310 of FIG. 6 may be performed as follows. First, the pack housing 50 in which the frames 200, 300 are coupled to the bottom cover 100 by using welding or the like is prepared. In this case, although the main body 320 of the center beam 310 is fixed to the bottom cover 100 by using welding, the expansion portion 330 should be in a slidable state. Next, the battery module 60 is seated on the bottom cover 100. In this case, the battery module 60 may be seated so that the fastening block 64 provided on one side of the battery module 60 is located on the side beam 210. Next, the expansion portion 330 of the center beam 310 is moved so that the fastening block 64 provided on another side of the battery module 60 is located on the center beam 310. Because the fastening protrusion 323 protrudes from the expansion portion fastening hole 336 and the expansion portion fastening hole 336 has a long hole shape, when the expansion portion 330 is moved left and right in the width direction, a relative position of the fastening protrusion 323 in the expansion portion fastening hole 336 may be changed and the expansion portion 330 may be moved to a desired position while freely sliding without resistance. Next, a position of the expansion portion 330 is fixed by fastening the fastening member 324 to the fastening protrusion 323. Next, the battery module 60 is fixed to the pack housing 50 by fastening the bolt B to the fastening block 64. According to this method, the common battery pack 40 may be implemented without complicated assembly and manufacturing processes, defect factors, and cost increase.

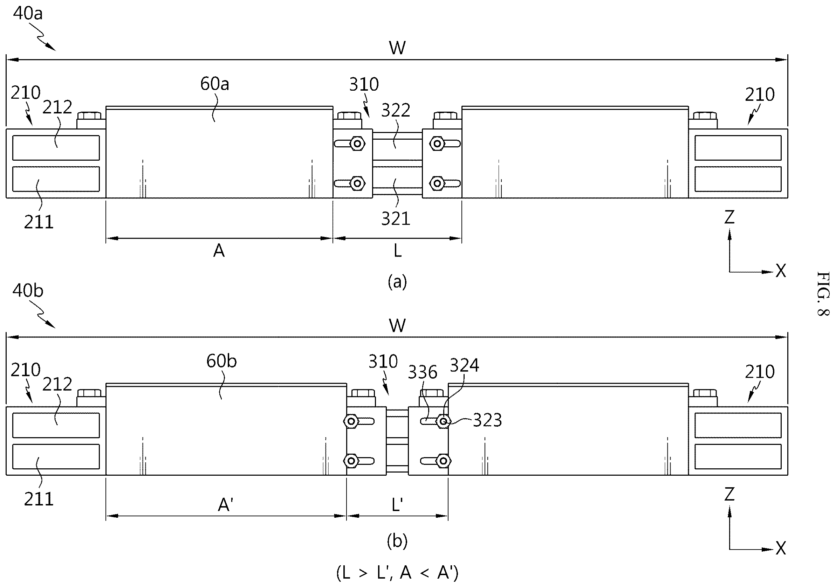

FIG. 8 is a view for describing that the center beam of FIG. 6 is applied to battery modules of various sizes.

For example, although a battery pack 40a illustrated in (a) of FIG. 8 includes a battery module 60a having a size A and a battery pack 40b illustrated in (b) of FIG. 8 includes a battery module 60b having a size A' greater than the size A, the two battery packs 40a, 40b may have the same pack housing size W (A < A').

The battery pack 40b including the battery module 60b having a relatively large size is assembled so that a width of the center beam 310 is L'. The battery pack 40a including the battery module 60a having a relatively small size is assembled so that a width of the center beam 310 is extended to L greater than L' (L > L'). In the battery pack 40b, the fastening protrusion 323 is located close to an outer end of the expansion portion fastening hole 336, whereas in the battery pack 40a, the fastening protrusion 323 is located close to an inner end of the expansion portion fastening hole 336.

When a width of the side beam 210 is C, a pack housing size W of the battery pack 40a is 2 × C + 2 × A + L, and a pack housing size W of the battery pack 40b is 2 × C + 2 × A' + L', which are the same.

As such, according to an embodiment of the present disclosure, the pack housing 50 that may be easily applied to battery modules of various sizes especially by adjusting a size (width) of the center beam 310 may be provided.

A flow path through which a fluid may flow is provided in at least one of the outer frame 200 and the partition frame 300 as described above. Referring to FIGS. 6 to 8, flow paths 211, 212 are provided in the side beam 210, and flow paths 321, 322 are provided in the center beam 310, particularly, the main body 320. When flow paths are provided in the outer frame 200 or the partition frame 300, the flow paths may communicate with each other.

At least one of both ends of each of the flow paths 211, 212, 321, 322 may be formed to communicate with the outside. Gas or flames introduced into each of the flow paths 211, 212, 321, 322 may be discharged to the outside through the communication hole 203 (see FIG. 4).

In particular, in the present embodiment, because the side beam 210 and the main body 320 of the center beam 310 are provided in a pipe shape with a hollow inner space and one or more separation walls for dividing the hollow inner space into an upper space and a lower space are provided in the height direction to divide the hollow inner space into a plurality of areas in the height direction, a multi-layer structure in which the flow paths 211, 212 are stacked in the height direction and the flow paths 321, 322 are stacked in the height direction is provided. The flow paths 211, 321 in the lower space may communicate with each other, and the communication holes 203 may be disposed to correspond to some battery modules 60. Likewise, the flow paths 212, 322 in the upper space may communicate with each other, and other communication holes 203 may be disposed to correspond to other some battery modules 60. In this case, gas generated during thermal runaway of some battery modules may be discharged to the outside along an independent discharge path through the flow paths 211, 321 of the lower space or the flow paths 212, 322 of the upper space without affecting other battery modules.

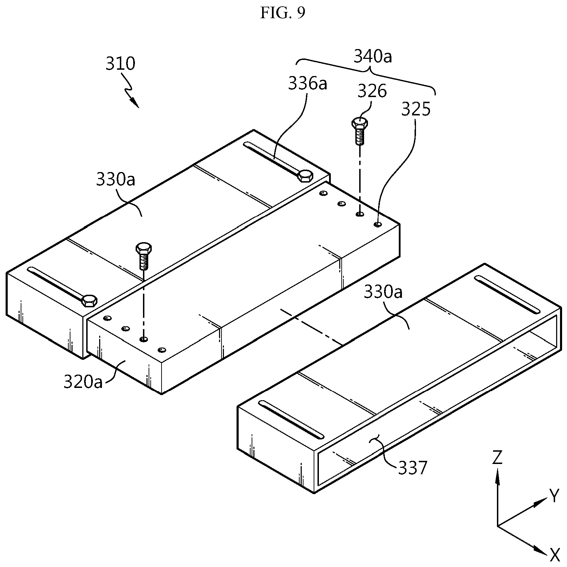

In a modified example, the center beam 310 may include a main body 320a, an expansion portion 330a, and a width adjustment member 340a as shown in FIG. 9. FIG. 9 is a view for describing another example of a variable structure center beam.

Referring to FIG. 9, the expansion portion 330a has a receiving space corresponding to a cross-section of the main body 320a and is slidably fitted to an outer peripheral surface of the main body 320a. The expansion portion 330a extends a width by being drawn out from the main body 320a. The width adjustment member 340a adjusts an extension length of the expansion portion 330a while fixing the expansion portion 330a drawn out from the main body 320a.

The expansion portion 330a may include a first expansion portion 330a located on one side of the main body 320a and a second expansion portion 330a located on another side of the main body 320a. The first expansion portion 330a and the second expansion portion 330a are the same element. That is, the expansion portion 330a may be provided as one pair. Alternatively, the expansion portion 330a may be provided only on one side of the main body 320a.

The expansion portion 330a is an element for extending a width of the center beam 310, and a slide hole 337 penetrating along the width direction is formed in the expansion portion. The expansion portion 330a may extend a width of the center beam 310 by being drawn out in one direction from the main body 320a.

Accordingly, because a width of the center beam 310 may be extended by the expansion portion 330a, even when a size of a battery module is changed, a width may be adjusted to a corresponding appropriate width and thus the center beam 310 may be applied to battery modules of various sizes.

The width adjustment member 340a may include an expansion portion fastening hole 336a, a main body fastening hole 325, and a fixing member 326.

The expansion portion fastening hole 336a may be formed in a long hole shape along the width direction of the expansion portion 330a to allow movement of the expansion portion 330a. The expansion portion fastening hole 336a is a variable fastening hole.

The expansion portion 330a may extend a width of the center beam 310 by moving in a range corresponding to a length of the expansion portion fastening hole 336a.

The main body fastening hole 325 is an element for providing a fastening portion of the fixing member 326 while communicating with the expansion portion fastening hole 336a, and at least one main body fastening hole 325 may be formed to communicate with the expansion portion fastening hole 336a. The main body fastening hole 325 is a fixed fastening hole. The fixing member 326 is an element for fixing the expansion portion 330a in a width-adjusted state by fixing the expansion portion 330a in a state where the expansion portion 330a is moved, for example, drawn out, from the main body 320a. A plurality of main body fastening holes 325 may be provided to be spaced apart from each other along the width direction of the main body 320a.

The fixing member 326 may be fastened to the main body fastening hole 325 through the expansion portion fastening hole 336a so that the expansion portion 330a is moved to adjust a width of the center beam 310 to a desired degree and is fixed to the main body 320a. The fixing member 326 may be inserted and fastened to the main body fastening hole 325 selected from among the plurality of main body fastening holes 325. The fixing member 326 may be a fixing pin or a fixing bolt.

As such, the expansion portion 330a and the main body 320a may be fixed via the fixing member 326 fastened to the expansion portion fastening hole 336a and the main body fastening hole 325.

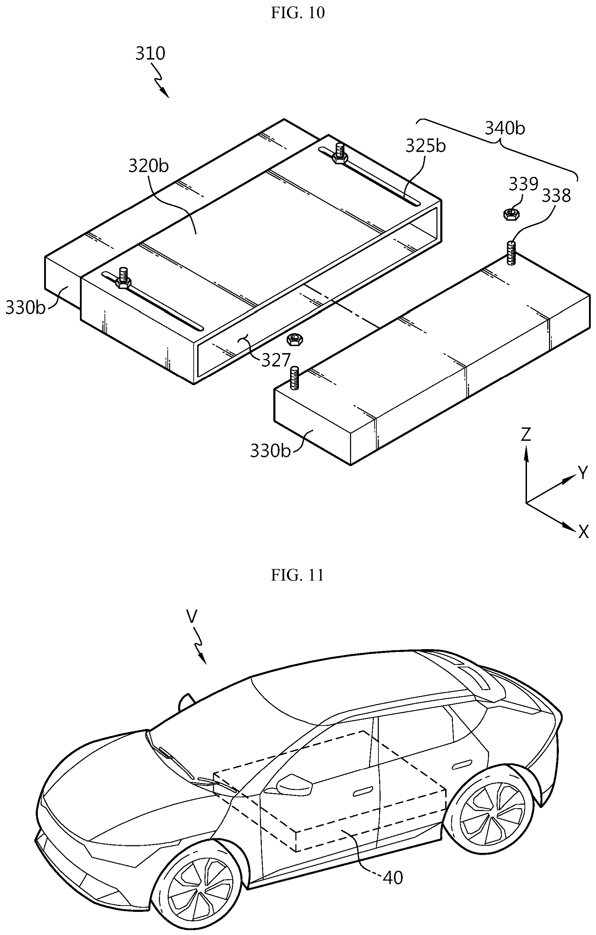

On the other hand, as shown in FIG. 10, the center beam 310 may include a main body 320b, an expansion portion 330b, and a width adjustment member 340b. FIG. 10 is a view for describing still another example of a variable structure center beam.

A slide hole 327 penetrating along the width direction may be formed in the main body 320b. The expansion portion 330b may be coupled to the main body 320b to extend a width of the center beam 310. The expansion portion 330b located on one side of the main body 320b and the expansion portion 330b located on another side of the main body 320b may be provided as one pair facing each other.

The expansion portion 330b is an element for extending a width of the center beam 310 and may be slidably disposed in the slide hole 327. The expansion portion 330b may be slidably fitted to an inner peripheral surface of the main body 320b.

As the expansion portion 330b slides, a width of the center beam 310 may be changed. An outer peripheral surface of the expansion portion 330b and the inner peripheral surface of the main body 320b may be in surface contact with each other. Although not shown, a rail and a rail groove may be formed between the expansion portion 330b and the main body 320b. The expansion portion 330b may straightly slide in the width direction without shaking due to the rail inserted into the rail groove. At least a portion of the expansion portion 330b is exposed to the outside of the main body 320b.

The width adjustment member 340b is an element for adjusting an extension length of the expansion portion 330b while fixing the expansion portion 330b drawn out from the main body.

The width adjustment member 340b may include a main body fastening hole 325b, a fastening protrusion 338, and a fastening member 339.

The main body fastening hole 325b may be formed in a long hole shape along the width direction of the main body 320b to allow movement of the expansion portion 330b. The fastening protrusion 338 is formed on the expansion portion 330b to protrude from the main body fastening hole 325b. The fastening member 339 may be fastened to the fastening protrusion 338 through the main body fastening hole 325b to fix the expansion portion 330b in a moved state.

The expansion portion 330b may be slidable inside the main body 320b through the slide hole 327, in other words, an open side surface of the main body 320b, and may be fixed by the width adjustment member 340b. Accordingly, the center beam 310 including the expansion portion 330b may be easily applied to battery modules of various sizes by adjusting a width of the center beam 310 including the expansion portion 330b.

The battery pack 40 according to an embodiment of the present disclosure may be applied to various devices. The devices are typically transportation means such as, but not limited to, an electric bicycle, an electric vehicle, and a hybrid vehicle. The battery pack 40 is suitable for use as a battery pack for an electric vehicle. Also, the battery pack 40 may be used as an energy source for an ESS. An ESS refers to a single system that stores power of hundreds of kWH or more. The ESS is the core of the renewable energy industry. Because it is difficult to produce electricity from renewable energy such as solar and wind power at a desired time, it is important to store the electricity and use it when necessary. The battery pack 40 according to an embodiment of the present disclosure may have energy density and capacity suitable for use as an energy source for such an ESS.

FIG. 11 is a view schematically illustrating a configuration of a vehicle according to an embodiment of the present disclosure.

Referring to FIG. 11, a vehicle V according to an embodiment of the present disclosure may include the battery pack 40 according to an embodiment of the present disclosure. The vehicle V may include a certain vehicle using electricity as a driving source such as an electric vehicle or a hybrid vehicle. Also, the vehicle V may further include various other elements, for example, a vehicle body or a motor, included in a vehicle, in addition to the battery pack 40 according to the present disclosure.

The battery pack 40 may be disposed at a certain position in the vehicle V. The battery pack 40 may be used as an electric energy source for driving the vehicle V by providing a driving force to a motor of the electric vehicle.

The battery pack 40 may be charged or discharged by an inverter according to driving of a motor and/or an internal combustion engine. The battery pack 40 may be charged by a regenerative charging device coupled to a brake. The battery pack 40 may be electrically connected to the motor of the vehicle V through the inverter.

As such, the battery pack 40 provided in the vehicle V may provide electric energy required for various operations of the vehicle V. Also, because the battery pack 40 has various effects mentioned above, the vehicle V including the battery pack 40 may also have such effects. The battery pack 40 may be manufactured to have various energies, but may have the same pack housing size and the same vehicle mounting position even when energy is changed. Accordingly, there is no need to change a vehicle frame of the vehicle V.

It will be understood by one of ordinary skill in the art that when terms indicating directions such as upper, lower, left, right, front, and rear are used, these terms are only for convenience of explanation and may vary according to a position of a target object, a position of an observer, etc.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

**[Explanation of Reference Signs]**

| | | | |
|---|---|---|---|
| 40, 40a, 40b: | battery pack | 50: | pack housing |
| 60, 60a, 60b: | battery module | 62: | module case |
| 64: | fastening block | 100: | bottom cover |
| 200: | outer frame | 203: | communication hole |
| 210: | side beam | 220: | front beam |
| 230: | rear beam | 211, 212, 321, 322: | flow path |
| 300: | partition frame | 310: | center beam |
| 320, 320a, 320b: | main body | 323, 338: | fastening protrusion |
| 324, 339: | fastening member | 325, 325b: | main body fastening hole |
| 326: | fixing member | 327, 337: | slide hole |
| 330, 330a, 330b: | expansion portion | 331: | support portion |
| 332: | upper extension portion | 333: | lower extension portion |
| 334: | front extension portion | 335: | rear extension portion |
| 336, 336a: | expansion portion fastening hole | 340, 340a, 340b: | width adjustment member |
| 390: | cross beam | 400: | top cover |
| B: | bolt | M: | module space |
| V: | vehicle | | |

## Claims

1. A pack housing comprising:
a bottom cover on which a battery module is placed;
an outer frame formed on an outer side of the bottom cover; and
a partition frame dividing an inner space formed by the bottom cover and the outer frame into a plurality of module spaces,
wherein at least one of the outer frame and the partition frame has a variable structure capable of adjusting a width.

2. The pack housing according to claim 1, wherein the partition frame comprises a center beam disposed in a front-back direction on the bottom cover, and the center beam has a variable structure capable of adjusting a width in a left-right direction.

3. The pack housing according to claim 1, wherein the variable structure comprises a main body, an expansion portion, and a width adjustment member,
wherein the expansion portion has a receiving space corresponding to a cross-section of the main body and is slidably fitted to an outer peripheral surface of the main body,
the expansion portion is configured to extend a width by being drawn out from the main body, and
the width adjustment member is configured to adjust an extension length of the expansion portion while fixing the expansion portion drawn out from the main body.

4. The pack housing according to claim 3, wherein the expansion portion comprises a first expansion portion located on one side of the main body and a second expansion portion located on another side of the main body.

5. The pack housing according to claim 3, wherein the expansion portion comprises a support portion contacting a side surface of the main body, and an upper extension portion and a lower extension portion respectively extending from both ends of the support portion in a height direction to a top surface and a bottom surface of the main body.

6. The pack housing according to claim 5, wherein the expansion portion comprises a front extension portion and a rear extension portion respectively extending from both ends of the support portion in a longitudinal direction to a front surface and a rear surface of the main body.

7. The pack housing according to claim 6, wherein the width adjustment member comprises:
an expansion portion fastening hole formed in the front extension portion and the rear extension portion in a long hole shape along a width direction of the expansion portion to allow movement of the expansion portion;
a fastening protrusion formed on the main body to protrude from the expansion portion fastening hole; and
a fastening member fastened to the fastening protrusion through the expansion portion fastening hole to fix the expansion portion in a moved state.

8. The pack housing according to claim 3, wherein the expansion portion comprises a slide hole formed therein to penetrate along a width direction or a slide groove that is closed on an outside and is recessed inward.

9. The pack housing according to claim 8, wherein the width adjustment member comprises:
an expansion portion fastening hole formed in a long hole shape along the width direction of the expansion portion to allow movement of the expansion portion;
at least one main body fastening hole formed in the main body and communicating with the expansion portion fastening hole; and
a fixing member fastened to the main body fastening hole through the expansion portion fastening hole to fix the expansion portion in a moved state.

10. The pack housing according to claim 1, wherein the variable structure comprises a main body, an expansion portion, and a width adjustment member,
wherein the main body comprises a slide hole formed therein to penetrate along a width direction,
the expansion portion is slidably provided in the slide hole, and
the width adjustment member is configured to adjust an extension length of the expansion portion while fixing the expansion portion drawn out from the main body.

11. The pack housing according to claim 1, wherein at least one of the outer frame and the partition frame is a beam manufactured by extruding aluminum so that an empty space and a rib are mixed inside.

12. The pack housing according to claim 1, wherein a flow path through which a fluid flows is provided inside at least one of the outer frame and the partition frame.

13. The pack housing according to claim 12, wherein a communication hole for communication between the module space and the flow path is formed in at least one of the outer frame and the partition frame.

14. The pack housing according to claim 12, wherein the flow path has a multi-layer structure in which a plurality of unit flow paths are stacked in a height direction.

15. The pack housing according to claim 12, wherein the fluid comprises gas generated during thermal runaway of the battery module.

16. The pack housing according to claim 1, wherein at least one of the outer frame and the partition frame is formed in a pipe shape with a hollow inner space, and one or more separation walls for dividing the hollow inner space into an upper space and a lower space are provided in a height direction to divide the hollow inner space into a plurality of areas in the height direction.

17. A battery pack comprising:
the pack housing according to any one of claims 1 to 16; and
a battery module seated in each of a plurality of module spaces.

18. The battery pack according to claim 17, wherein the battery module is fixed to at least one of an outer frame and a partition frame.

19. The battery pack according to claim 17, wherein
the battery module comprises a battery cell assembly and a module case for fixing the battery cell assembly,
the battery module comprises a fastening block protruding from the module case and provided so that a bolt is inserted in an up-down direction, and
the battery module is fixed to at least one of the outer frame and the partition frame when the bolt is fastened to the fastening block.

20. A vehicle comprising the battery pack according to claim 17.
